# EUROPEAN PATENT SPECIFICATION

(11) **EP 2 161 613 B1**
(45) Date of publication and mention of the grant of the patent: **07.08.2013**
(21) Application number: 09169751.6
(22) Date of filing: 08.09.2009
(51) Int. Cl.: G02F 1/1335, G02F 1/1347

(54) **Display apparatuses having an active transflective device**
Anzeigevorrichtungen mit einer aktiven transflektiven Vorrichtung
Appareils d'affichage dotés d'un dispositif transflectif actif

(30) Priority: 08.09.2008 KR 20080088474
(43) Date of publication of application: 10.03.2010
(73) Proprietor: Samsung Electronics Co., Ltd., Suwon-si, Gyeonggi-do, 443-742 (KR)
(72) Inventor: Jang, Jae-eun, Yongin-si, Gyeonggi-do (KR); Cha, Seung-nam, Yongin-si, Gyeonggi-do (KR); Jung, Jae-eun, Yongin-si, Gyeonggi-do (KR); Jin, Yong-wan, Yongin-si, Gyeonggi-do (KR)
(74) Representative: Greene, Simon Kenneth

(56) References cited:
- JP-A- 10 197 844
- US-A- 6 144 359
- US-A1- 2007 159 678
- US-B1- 6 211 931
- YAROSHCHUK ET AL: "Electro-optics and structure of polymer dispersed liquid crystals doped with nanoparticles of inorganic materials" OPTICAL MATERIALS, ELSEVIER SCIENCE PUBLISHERS B.V. AMSTERDAM, NL, vol. 29, no. 8, 13 February 2007 (2007-02-13), pages 1097-1102, XP005885811 ISSN: 0925-3467
- ZHAO J ET AL: "Synthesis of thin films of barium titanate and barium strontium titanate nanotubes on titanium substrates" MATERIALS LETTERS, NORTH HOLLAND PUBLISHING COMPANY. AMSTERDAM, NL, vol. 59, no. 18, 1 August 2005 (2005-08-01), pages 2329-2332, XP025257783 ISSN: 0167-577X [retrieved on 2005-08-01]

## Description

### BACKGROUND

### 1. Field

One or more example embodiments relate to a display apparatus which appropriately adjusts reflection and transmission of incident light so as to increase brightness and to decrease power consumption.

### 2. Description of the Related Art

Due to the recent increase in the use of portable devices such as mobile phones, Personal Digital Assistants (PDA), Portable Multimedia Players (PMP), and Digital Multimedia Broadcasting (DMB), display apparatuses requiring low power consumption and excellent outdoor visibility are required.

Accordingly, research on transflective liquid crystal displays (LCD) having both functions of reflective display devices and transmissive display devices is being conducted. Transflective LCDs form images using light of a backlight unit and/or outdoor light so that even if the transflective LCDs are used in bright environments including sunlight, visibility of the display may be secured and power consumption may be easily reduced. In this case, a region of a liquid cell is divided into two and the divided regions are respectively allocated to a reflection region and a transmission region. However, a method of manufacturing of a transflective LCD is relatively complicated and incident light is divided to be used, thereby causing a reduction in luminance.

JP 10-197844 describes a liquid crystal display of transmission-reflection type with a reflection transmission element in the form of a PDLC behind a separate liquid crystal display.

A similar arrangement with a PDLC device behind an LCD so that the PDLC can be switched from a transmissive to a reflective mode is taught by US 6,144,359.

A discussion of materials for incorporation in polymer dispersed liquid crystals is provided in Yaroshchuk and Dolgov, Optical Materials volume 29 (2007) pages 1097 to 1102.

### SUMMARY

One or more example embodiments include a display apparatus having luminance and outdoor visibility and having relatively low power consumption.

According to an aspect of the invention there is provided a display panel according to claim 1.

The display panel may modulate light by controlling transmissivity of a liquid crystal layer of the display panel and the liquid crystal layer includes a black dye and a polymer dispersed liquid crystal (PDLC).

The display panel may modulate light by using electrophoresis of electrification particles, electrowetting materials, or electrochromic materials.

The active transflective device may include polymer dispersed liquid crystals (PDLC) and the active transflective device may be formed by inserting a nano structure material into polymer dispersed liquid crystal (PDLC).

One or more example embodiments may include a display apparatus including a backlight unit, an active transflective device electrically controlling light transmissivity and reflectivity, and a display panel forming an image by modulating light reflected and/or transmitted by the active transflective device.

### BRIEF DESCRIPTION OF THE DRAWINGS

Aspects of example embodiments will become apparent and more readily appreciated from the following description of the examples, taken in conjunction with the accompanying drawings of which:
FIG. 1 is a cross-sectional view of a display apparatus according to an example;
FIGS. 2A and 2B are cross-sectional views illustrating light incident on a front surface of a display panel in the display apparatus of FIG. 1, according to an example;
FIGS. 3A and 3B are cross-sectional views illustrating light incident on a back surface of the display panel in the display apparatus of FIG. 1, according to an example;
FIGS. 4A and 4B are cross-sectional views illustrating light incident on the front surface and the back surface of a display panel in the display apparatus of FIG. 1, according to an example;
FIG. 5 is a cross-sectional view of a display apparatus according to another example;
FIG. 6 is a cross-sectional view of a display apparatus according to another example;
FIG. 7 is a cross-sectional view of a display apparatus according to another example;
FIG. 8 is a cross-sectional view of a display apparatus according to another example;
FIGS. 9-11 illustrate active transflective devices according to various examples, Figure 10 showing an embodiment; and
FIGS. 12A-12C are cross-sectional views illustrating a display apparatus according to examples.

### DETAILED DESCRIPTION

Examples will be more clearly understood from the detailed description taken in conjunction with the accompanying drawings.

Various examples will now be described more fully with reference to the accompanying drawings in which some example embodiments are shown. In the drawings, the thicknesses of layers and regions may be exaggerated for clarity.

Detailed illustrative example embodiments are disclosed herein. However, specific structural and functional details disclosed herein are merely representative for purposes of describing example embodiments. Other embodiments may, however, may be embodied in many alternate forms and should not be construed as limited to only the example embodiments set forth herein.

Accordingly, while example embodiments are capable of various modifications and alternative forms, example embodiments thereof are shown by way of example in the drawings and will herein be described in detail. It should be understood, however, that there is no intent to limit example embodiments to the particular forms disclosed, but on the contrary, example embodiments are to cover all modifications, equivalents, and alternatives falling within the scope of the example embodiments. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between", "adjacent" versus "directly adjacent", etc.).

The terminology used herein is for the purpose of describing particular example embodiments only and is not intended to be limiting of example embodiments. As used herein, the singular forms "a", "an" and "the" are intended to include the plural forms as well, unless the context clearly indicates otherwise. It will be further understood that the terms "comprises", "comprising,", "includes" and/or "including", when used herein, specify the presence of stated features, integers, steps, operations, elements, and/or components, but do not preclude the presence or addition of one or more other features, integers, steps, operations, elements, components, and/or groups thereof.

Also, the use of the words "compound," "compounds," or "compound(s)," refer to either a single compound or to a plurality of compounds. These words are used to denote one or more compounds but may also just indicate a single compound.

Now, in order to more specifically describe example embodiments, various example embodiments will be described in detail with reference to the attached drawings. In the figures, if a layer is formed on another layer or a substrate, it means that the layer is directly formed on another layer or a substrate, or that a third layer is interposed therebetween. In the following description, the same reference numerals denote the same elements.

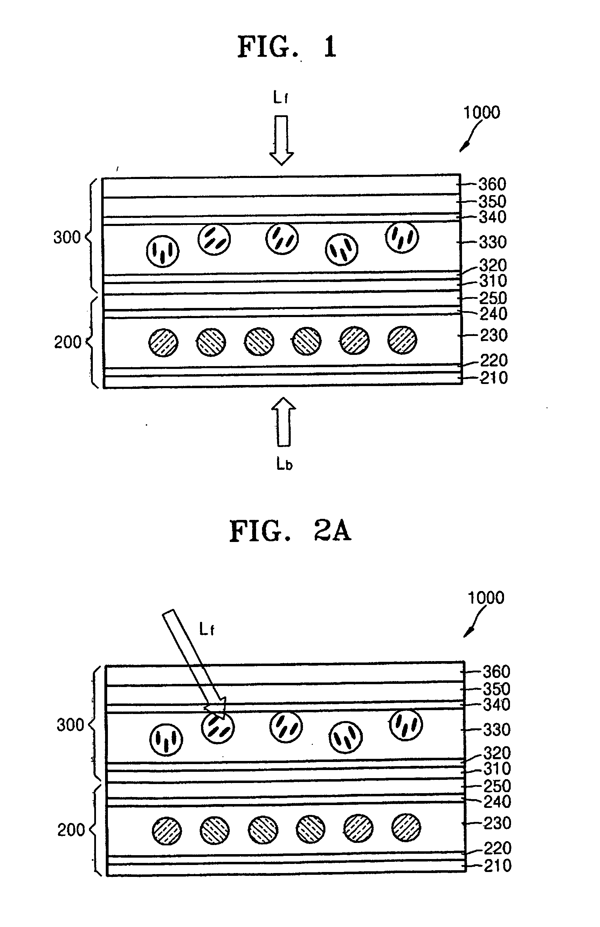

FIG. 1 is a cross-sectional view of a display apparatus 1000 according to an example. Referring to FIG. 1, the display apparatus 1000 includes an active transflective device 200 and a display panel 300. Thus, the display apparatus 1000 is configured to use not only light Lf incident on a front surface of the display panel 300 but also light Lb incident on a back surface of the display panel 300 as image forming light. It should be understood that a backlight may be employed with the display apparatus 1000.

The active transflective device 200 is configured for light transmissivity and reflectivity to be electrically controlled. The active transflective device 200 includes a first liquid crystal layer 230 which is formed of polymer dispersed liquid crystal (PDLC). When an electric field is not applied to the PDLC, the PDLC diffuses incident light due to a permittivity difference between the polymer and the liquid crystal. When an electric field is applied to the PDLC, the PDLC transmits light, since a permittivity difference between the polymer and the liquid crystal arranged according to the electric field is reduced and thus, the PDLC becomes transparent. More specifically, the first liquid crystal layer 230 is interposed between a first substrate 210 and a second substrate 250. Also, transparent electrode layers 220 and 240 are formed on inner surfaces of the first substrate 210 and the second substrate 250, respectively, so as to apply an electric field to the first liquid crystal layer 230 and to control reflection/transmission characteristics. As intensity of voltages applied to the transparent electrode layers 220 and 240 is controlled, reflectivity and transmissivity of the first liquid crystal layer 230 may be controlled.

The display panel 300 modulates light reflected and/or transmitted by the active transflective device 200 and forms an image and the display panel 300 controls the transmissivity of liquid crystal and modulates light. More specifically, the display panel 300 includes a second liquid crystal layer 330, which is formed by mixing PDLC and black dye. When an electric field is applied to the second liquid crystal layer 330, the second liquid crystal layer 330 transmits light. When an electric field is not applied to the second liquid crystal layer 330, the PDLC in the second liquid crystal layer 330 diffuses light and the second liquid crystal layer 330 absorbs light due to the black dye, so that on and off states of pixels may be realized. Since such configuration does not use polarized light of incident light, a polarizing plate is not needed, unlike a conventional liquid crystal panel. The second liquid crystal layer 330 is interposed between the second substrate 250 and a third substrate 360. A color filter 350 is formed on an inner surface of the third substrate 360 for displaying a color. A thin film transistor layer 310 is disposed on an inner surface of the second substrate 250. Transparent electrode layers 320 and 340 are respectively formed on inner surfaces of the thin film transistor layer 310 and the color filter 350. In addition, the transparent electrode layers 320 and 340 and the thin film transistor layer 310 are prepared so as to control the second liquid crystal layer 330 in correspondence to each pixel. The outer surface of the third substrate 360 constitutes a display surface on which an image is displayed.

Hereinafter, a principle of forming an image using light incident on a front surface and/or a back surface of the display panel 300 in the display apparatus 1000 is described with reference to FIGS. 2A, 2B, 3A, 3B, 4A, and 4B. In the drawings, an optical path, in which light is on and off only with respect to one sub-pixel, is described. However, it should be understood that below described apparatuses may be applied to multiple sub-pixels.

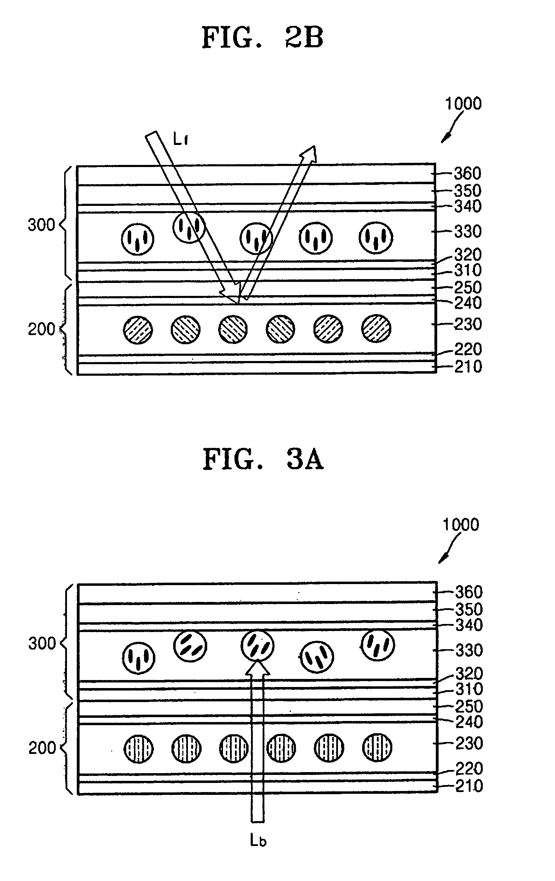

FIGS. 2A and 2B are cross-sectional views illustrating light Lf incident on the front surface of the display panel 300 being on/off modulated in the display apparatus 1000 of FIG. 1, thereby configured to form a reflective image. In order to form the reflective image, the active transflective device 200 may function as a reflecting plate by not applying a voltage to the transparent electrode layers 220 and 240. Therefore, the PDLC in the first liquid crystal layer 230 assumes a light diffusing mode. In FIG. 2A, since voltage is also not applied to the second liquid crystal layer 330, liquid crystals are not arranged in an array and the PDLC in the second liquid crystal layer 330 assumes a light diffusing mode due to a permittivity difference between the polymer and the liquid crystals. Here, light is absorbed in the second liquid crystal layer 330 by the black dye mixed with the PDLC and is not emitted to the display surface, thereby realizing a pixel off state.

In FIG. 2B, a voltage is applied to the second liquid crystal layer 330, and thus liquid crystals are arranged in an array. In this case, a permittivity difference between the liquid crystals and the polymer is reduced and the PDLC becomes transparent so as to transmit light. In addition, since an electric field is not applied to the first liquid crystal layer 230, the active transflective device 200 functions as a reflecting plate so that the light Lf incident on the front surface of the display panel 300 is emitted via the display surface and the display apparatus 1000 is in a pixel-on state displaying a corresponding color of the color filter 350.

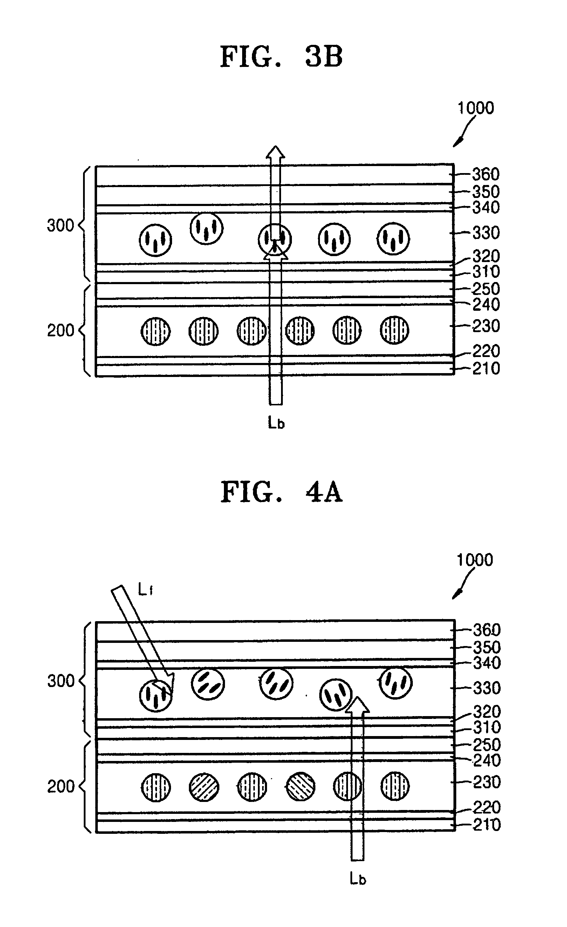

FIGS. 3A and 3B are cross-sectional views illustrating light Lb incident on the back surface of the display panel 300 being on/off modulated in the display apparatus 1000 of FIG. 1, thereby configured to form a transmissive image. In order to form the transmissive image, the active transflective device 200 may be transparent so as to transmit light. Thus, a voltage is applied to the transparent electrode layers 220 and 240 and the voltage is controlled so that the first liquid crystal layer 230 can assume a light transmitting mode. In FIG. 3A, a second voltage is not applied to the second liquid crystal layer 330 and thus, liquid crystals are not arranged in an array. In this case, the PDLC in the second liquid crystal layer 330. assumes a light diffusing mode due to a permittivity difference between the polymer and the liquid crystals. Light is absorbed in the second liquid crystal layer 330 by the black dye mixed with the PDLC. That is, the light Lb transmitted through the active transflective device 200 is absorbed in the second liquid crystal layer 330 and is not emitted via the display surface so that the display apparatus 1000 is in a pixel-off state.

In FIG. 3B, the second voltage is applied to the second liquid crystal layer 330, and thus liquid crystals in the second liquid crystal layer 330 are arranged in an array. In this case, a permittivity difference between the liquid crystals and the polymer in the second liquid crystal layer 330 is reduced and the PDLC in the second liquid crystal layer 330 becomes transparent so as to transmit light. The light Lb is transmitted through the active transflective device 200 and becomes incident on the back surface of the display panel 300. The second liquid crystal layer 330, of which the display apparatus 1000 is in a pixel-on state, displays a corresponding color of the color filter 350 on the display surface.

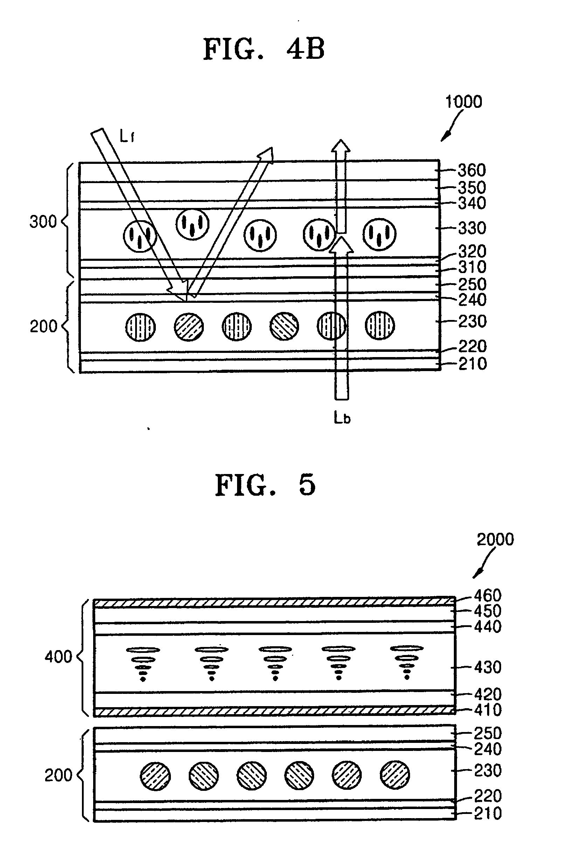

FIGS. 4A and 4B are cross-sectional views illustrating lights Lf and Lb respectively incident on the front surface and the back surface of the display panel 300 being on/off modulated in the display apparatus 1000. Therefore, light is modulated in a transflective form. In order to form a transflective image, the active transflective device 200 may have reflection/transmission characteristics so as to reflect light Lf incident on the front surface of the display panel 300 and transmit light Lb incident on the back surface of the display panel 300. Accordingly, a voltage is applied to the transparent electrode layers 220 and 240 and intensity of the voltage is appropriately controlled so that the first liquid crystal layer 230 can assume a transflective state. The degree of transreflectivity may be determined according to brightness of the lights Lf and Lb respectively incident on the front surface and the back surface of the display panel 300.

In FIG. 4A, a second voltage is not applied to the second liquid crystal layer 330 and thus liquid crystals are not arranged in an array. In this case, the PDLC in the second liquid crystal layer 330 assumes a light diffusing mode due to a permittivity difference between the polymer and the liquid crystals and the light is absorbed in the second liquid crystal layer 330 by the black dye mixed with the PDLC. That is, the light Lf incident on the first surface of the display panel 300 and the light Lb incident on the back surface of the display panel 300 and transmitted through the active transflective device 200 are absorbed in the second liquid crystal layer 330 and are not emitted to the display surface so that the display apparatus 1000 is in a pixel-off state.

In FIG. 4B, the second voltage is applied to the second liquid crystal layer 330 and thus liquid crystals are arranged in an array. In this case, the permittivity difference between the polymer and the liquid crystals is reduced and the PDLC in the second liquid crystal layer 330 becomes transparent so as to transmit light. The light Lf incident on the front surface of the display panel 300 is reflected from the active transflective device 200 and contributes to image forming light. The light Lb is transmitted through the active transflective device 200, becomes incident on the back surface of the display panel 300 and contributes to image forming light. The display apparatus 1000 is in a pixel-on state displaying a color of the color filter 350 on the display surface.

As described above, in the display apparatus 1000 according to the examples described with reference to FIGS. 1 to 4B, reflection/transmission characteristics of the active transflective device 200 may be controlled and light incident on the front surface and/or the back surface of the display panel 300 may be appropriately used. As compared with a conventional display apparatus which only uses light incident on the display surface so as to form a reflective image, the display apparatus 1000 uses external light and has excellent luminance and power consumption.

The display panel 300 and the active transflective device 200 are not limited to the above example embodiments and may be configured in various ways. Examples of other such configurations will now be described.

FIG. 5 schematically illustrates a display apparatus 2000 according to another example. Referring to FIG. 5, the display apparatus 2000 includes the active transflective device 200 and a display panel 400. The display panel 400 is different from the display panel 300 of FIG. 1, in that the display panel 400 is a conventional liquid crystal panel. The display panel 400 includes a liquid crystal layer 430 in which transmissivity is controlled according to applied voltage and polarized light of incident light. The crystal layer 430 is interposed between two transparent substrates 420 and 450 and polarizing plates 410 and 460 are respectively disposed on outer surfaces of the two transparent substrates 420 and 450. In addition, a color filter 440 for forming a color is disposed on an inner surface of the transparent substrate 450. Although not illustrated, pixel electrode layers and TFT layers may be disposed to control the liquid crystal layer 430 in correspondence to each pixel.

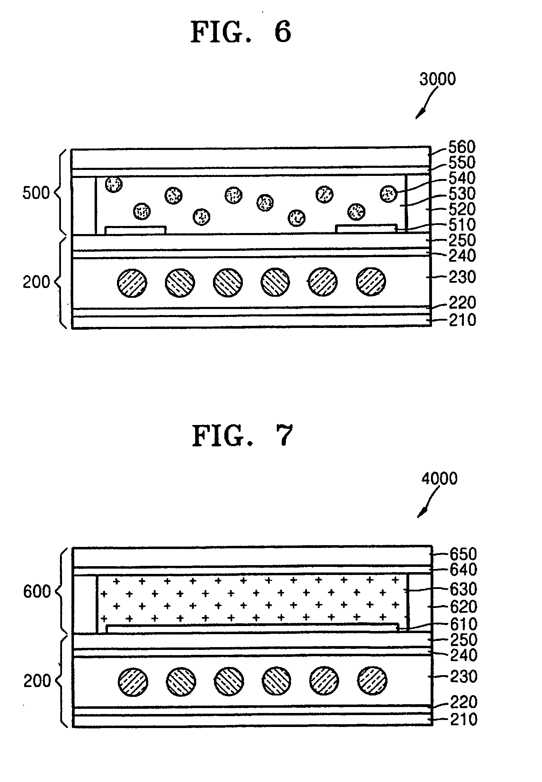

FIG. 6 is a cross-sectional view of a display apparatus 3000 according to another example. The display apparatus 3000 is different from the display apparatus 1000 of FIG. 1 in that the display apparatus 3000 includes a display panel 500 in addition to the active transflective device 200 wherein the display panel 500 uses electrophoresis of electrification particles. The electrification particles may be about 1 nm to 100nm. The display panel 500 includes a partition wall 520 partitioning a region between the second substrate 250 and a third substrate 560. A space 530 is enclosed by the partition wall 520, the second substrate 250 and a transparent electrode layer 550 formed on an inner surface of the third substrate 560. Electrophoresis particles 540 are disposed in the space 530. The space 530 may be filled with liquid or a gas-formed dispersion medium. The electrophoresis particles 540 are colored a color and are electrified by a electric charge. In addition, transparent electrode layers 510 and 550 are respectively formed on the second substrate 250 and the third substrate 560. A voltage is applied to the transparent electrode layers 510 and 550 so as to collect the charged electrophoresis particles 540. Since sizes of the transparent electrode layers 510 and 550 are different, colors are changed according to the color of the collected electrophoresis particles 540 and an image is formed. The arrangement of the transparent electrode layers 510 and 550 may vary.

FIG. 7 is a cross-sectional view of a display apparatus 4000 according to another example. Referring to FIG. 7, the display apparatus 4000 includes the active transflective device 200 and a display panel 600. The display panel 600 is different from the display panel 300 of FIG. 1 in that the display panel 600 uses electrochromic materials to realize display. The display panel 600 includes a partition wall 620 and an electrochromic layer 630, wherein the partition wall 620 partitions a region between the second substrate 250 and a third substrate 650. The electrochromic layer 630 is disposed in a space enclosed by the partition wall 620, the second substrate 250 and a transparent electrode layer 640 formed on an inner surface of the third substrate 650. The electrochromic layer 630 may be formed of, for example, a mixture of the electrochromic materials and an electrolyte. The electrochromic materials are materials in which colors thereof are changed by electron or electron holes. That is, when the electrochromic materials are mixed with the electrolyte and an electric field is applied to the mixture, electron or electron holes are combined with discoloring material and then, a color appears or disappears. Transparent electrode layers 610 and 640 are disposed on the second substrate 250 and the third substrate 650, respectively. The transparent electrode layers 610 and 640 face the electrochromic layer 630. Thus, a voltage for forming an electric field in the electrochromic layer 630 can be applied to the transparent electrode layers 610 and 640.

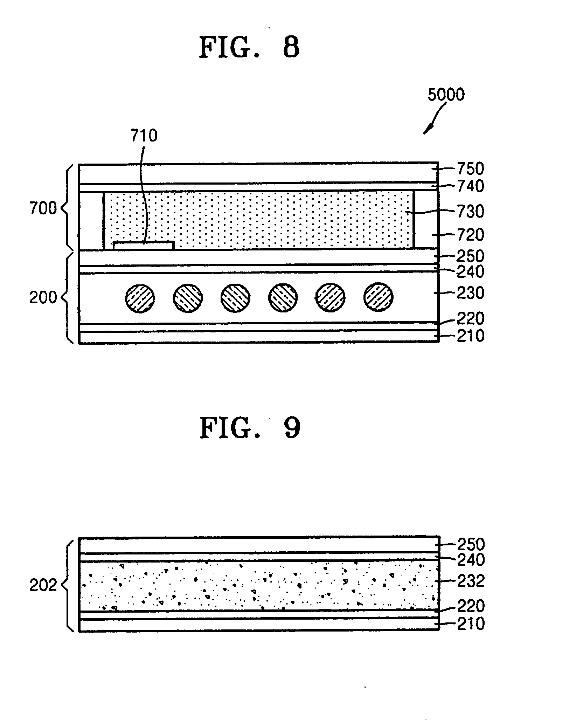

FIG. 8 is a cross-sectional view of a display apparatus 5000 according to another example. Referring to FIG. 8, the display apparatus 5000 includes the active transflective device 200 and a display panel 700. The display panel 700 is different from the display panel 300 of FIG. 1 in that the display panel 700 uses electrowetting materials to realize display. The display panel 700 includes a partition wall 720 and an electrowetting layer 730, wherein the partition wall 720 partitions a region between the second substrate 250 and a third substrate 750. The electrowetting layer 730 is disposed in a space enclosed by the partition wall 720, the second substrate 250 and a transparent electrode layer 740 formed on an inner surface of the third substrate 750. Electrowetting is denoted as the state in which surface tension of an interface is changed by an electric charge existing in the interface and thus, liquefied materials are uniformly diffused or focused on one side. The liquefied materials are mixed with dyes or pigments, the dyes and the pigments expressing a color, and the mixture is applied to a display apparatus. Transparent electrode layers 710 and 740 are disposed on the second substrate 250 and the third substrate 750, respectively. The transparent electrode layers 710 and 740 face the electrowetting layer 730. Thus, a voltage for forming an electric field in the electrochromic layer 730 can be applied to the transparent electrode layers 710 and 740.

FIGS. 9-11 illustrate various examples of an active transflective device that may be employed in the display apparatuses of FIGS. 1-8, instead of the active transflective device 200. As shown in FIGS. 9-11, a nano structure material is inserted into PDLC in order to increase reflectivity. Together, the nano structure material and the PDLC constitute an active transflective device.

Referring to FIG. 9, an active transflective device 202 includes a transflective layer 232 interposed between a first substrate 210 and a second substrate 250 on which transparent electrode layers 220 and 240 are respectively formed. The transflective layer 232 is formed of a white paper having a network structure inserted into the PDLC.

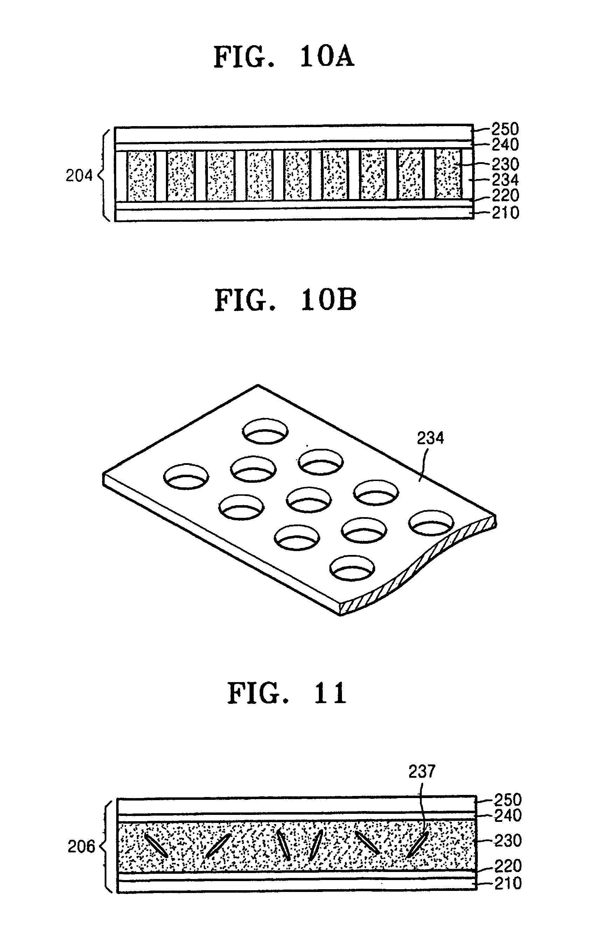

Referring to FIG. 10, an embodiment of the invention, an active transflective device 204 includes a transflective layer interposed between a first substrate 210 and a second substrate 250 on which transparent electrode layers 220 and 240 are respectively formed. The transflective layer is formed by inserting a nano structure 234 into a first liquid crystal layer 230 formed of PDLC. The nano structure 234 may be formed by forming nanopores in a material with excellent scattering efficiency such as aluminum oxide (Al2O3) or barium sulfate (BaSO4) by using etching. The nano structure 234 may be formed of, for example, anodizing aluminum oxide (AAO). FIG. 10B illustrates the nano structure 234.

Referring to FIG. 11, an active transflective device 206 includes a transflective layer 206a interposed between a first substrate 210 and a second substrate 250 on which transparent electrode layers 220 and 240 are respectively formed. The transflective layer 206a is formed by inserting nanoparticles 237 into a first liquid crystal layer 230 formed of PDLC. In FIG. 11, the nanoparticles 237 are illustrated as nanowires but nano-tube type nano materials may also be inserted. The nanoparticles 237 may be formed of a material such as titanium dioxide (TiO2), zinc oxide (ZnO), barium titanate (BaTiO3), lead titanate (PbTiO3), lead zirconate titanate (Pb(Zr,Ti)O3), Al2O3, silicon dioxide (SiO2), barium oxide (BaO), strontium titanate (SrTiO3), zinc sulfide (ZnS), or BaSO4.

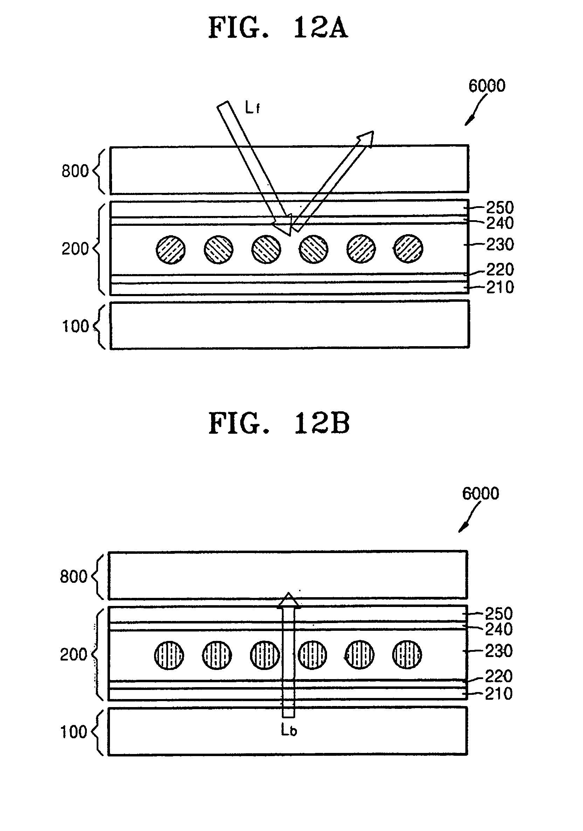

FIGS. 12A-12C are cross-sectional views of a display apparatus according to examples.

Referring to FIGS. 12A-12C, a display apparatus 6000 includes a backlight unit 100, the active transflective device 200, and a display panel 800. The active transflective device 200 is configured for transmissivity and reflectivity for the light to be electrically controlled. The active transflective device 200 includes the first liquid crystal layer 230, formed of PDLC, interposed between the first substrate 210 and the second substrate 250 on which the transparent electrode layers 220 and 240 are respectively formed. It should be understood that each of the active transflective devices 202, 204, and 206 illustrated in FIGS. 9, 10 and 11, respectively may be employed in the display apparatus 6000 instead of the active transflective device 200. The display panel 800 forms an image by modulating light reflected and/or transmitted by the active transflective device 200. It should be understood that the display panel 800 may be any one of the display panels 300, 400, 500, 600, and 700 illustrated in FIGS. 1, 5, 6, 7 and 8, respectively.

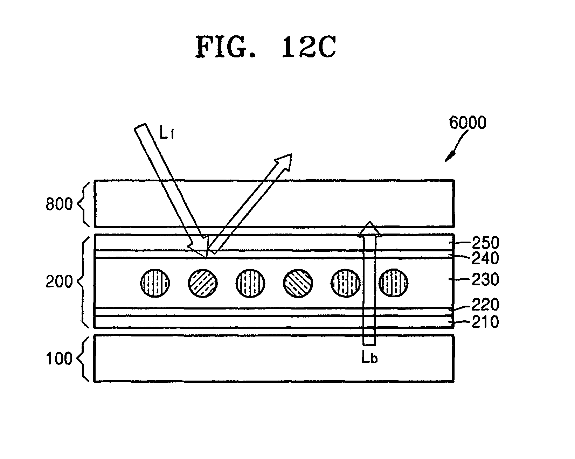

In the display apparatus 6000 including the backlight unit 100 as a separate light source for providing light to the active transflective device 200, external light Lf incident on the front surface of the display panel 800 is used to form a reflective image to the outside, where surrounding lighting conditions are excellent, as illustrated in FIG. 12A. In low lighting conditions, light Lb in the backlight unit 100 illustrated in FIG. 12B is used to form a transmissive image. In addition, referring to FIG. 12C, since both external light Lf incident on the front surface of the display panel 800 and light Lb provided in the backlight unit 100 may be used to form an image, a high luminance display may be realized with low power consumption.

As described above, according to the one or more of the above examples , the display apparatus includes an active transflective device which can appropriately control reflection/transmission characteristics of incident light, and thus external light incident on the front surface and back surface of the display panel may be efficiently used. In addition, when a backlight unit is added, external light and a backlight may be efficiently used according to the surrounding lighting conditions. Thus, the display apparatus may have luminance and outdoor visibility and low power consumption.

It should be understood that the examples described therein should be considered in a descriptive sense only and not for purposes of limitation. Descriptions of features or aspects within each example should typically be considered as available for other similar features or aspects in other examples.

## Claims

1. A display apparatus comprising:
an active transflective device (200) configured to electrically control light transmissivity and light reflectivity; and
a display panel (300,400,500,600) arranged to face a viewer side of the display apparatus and configured to form an image by modulating at least one of light reflected and light transmitted by the active transflective device.
wherein the active transflective device (200) is arranged behind the display panel and includes a polymer dispersed liquid crystal (PDLC) layer;
**characterised in that** the active transflective device (200) further comprises a nano-structure material inserted into the PDLC layer, the nano-structure material including a scattering material having a plurality of nanopores (234);
wherein the scattering material is formed of aluminum oxide, Al₂O₃, or barium sulfate (BaSO₄).

2. The display apparatus of claim 1, wherein the active transflective device (200) is configured to reflect light when a voltage is not applied to the active transflective device.

3. The display apparatus of claim 2, wherein the active transflective device (200) is configured to transmit light when a first voltage is applied to the active transflective device.

4. The display apparatus of claim 3, wherein the active transflective device (200) is configured to transmit and reflect light when a second voltage is applied to the active transflective device.

5. The display apparatus of claim 1, wherein the display panel (300,400,500,600) modulates light by controlling transmissivity of a liquid crystal layer (330) of the display panel.

6. The display apparatus of claim 5, wherein the liquid crystal layer (330) comprises a black dye and a polymer dispersed liquid crystal (PDLC).

7. The display apparatus of claim 1, wherein the display panel (300, 400,500,600) includes electrification particles for electrophoresis.

8. The display apparatus of claim 1, wherein the display panel (300, 400,500,600) includes electrowetting or electrochromic materials to modulate light.

9. The display apparatus of any one of the preceding claims, further comprising a backlight unit (100).

## Patentansprüche

1. Anzeigevorrichtung, die Folgendes umfasst:
eine aktive transreflektive Vorrichtung (200), die zum elektrischen Regeln der Transmissivität und der Reflektivität von Licht konfiguriert ist; und
eine Anzeigetafel (300, 400, 500, 600), die einer Betrachterseite der Anzeigevorrichtung zugewandt und zum Erzeugen eines Bildes durch Modulieren von von der aktiven transreflektiven Vorrichtung reflektiertem und/oder von dieser transmittiertem Licht konfiguriert ist; wobei die aktive transreflektive Vorrichtung (200) hinter der Anzeigetafel angeordnet ist und eine PDLC-(polymerdispergierter Flüssigkristall)-Schicht aufweist;
**dadurch gekennzeichnet, dass** die aktive transreflektive Vorrichtung (200) ferner ein in die PDLC-Schicht eingeführtes Nanostrukturmaterial umfasst, wobei das Nanostrukturmaterial ein Streumaterial mit mehreren Nanoporen (234) aufweist;
wobei das Streumaterial aus Aluminiumoxid, Al₂O₃, oder Bariumsulfat (BaSO₄) gebildet ist.

2. Anzeigevorrichtung nach Anspruch 1, wobei die aktive transreflektive Vorrichtung (200) so konfiguriert ist, dass sie Licht reflektiert, wenn keine Spannung an die aktive transreflektive Vorrichtung angelegt wird.

3. Anzeigevorrichtung nach Anspruch 2, wobei die aktive transreflektive Vorrichtung (200) so konfiguriert ist, dass sie Licht transmittiert, wenn eine erste Spannung an die aktive transreflektive Vorrichtung angelegt wird.

4. Anzeigevorrichtung nach Anspruch 3, wobei die aktive transreflektive Vorrichtung (200) so konfiguriert ist, dass sie Licht transmittiert und reflektiert, wenn eine zweite Spannung an die aktive transreflektive Vorrichtung angelegt wird.

5. Anzeigevorrichtung nach Anspruch 1, wobei die Anzeigetafel (300, 400, 500, 600) Licht durch Regeln der Transmissivität einer Flüssigkristallschicht (330) der Anzeigetafel moduliert.

6. Anzeigevorrichtung nach Anspruch 5, wobei die Flüssigkristallschicht (330) einen schwarzen Farbstoff und einen polymerdispergierten Flüssigkristall (PDLC) umfasst.

7. Anzeigevorrichtung nach Anspruch 1, wobei die Anzeigetafel (300, 400, 500, 600) Elektrifizierungspartikel für Elektrophorese beinhaltet.

8. Anzeigevorrichtung nach Anspruch 1, wobei die Anzeigetafel (300, 400, 500, 600) Elektrobenetzungs- oder Elektrochrommaterial zum Modulieren von Licht beinhaltet.

9. Anzeigevorrichtung nach einem der vorherigen Ansprüche, die ferner eine Hintergrundbeleuchtung (100) umfasst.

## Revendications

1. Appareil d'affichage comprenant :
un dispositif transflectif actif (200) configuré pour commander électriquement une transmissivité de lumière et une réflectivité de lumière ; et
un panneau d'affichage (300, 400, 500, 600) agencé pour faire face à un côté d'observateur de l'appareil d'affichage et configuré pour former une image en modulant au moins l'une d'une lumière réfléchie et d'une lumière transmise par le dispositif transflectif actif,
dans lequel le dispositif transflectif actif (200) est agencé derrière le panneau d'affichage et comporte une couche de cristaux liquides dispersés dans un polymère (PDLC) ;
**caractérisé en ce que** le dispositif transflectif actif (200) comprend en outre un matériau de nanostructure inséré dans la couche PDLC, le matériau de nanostructure comportant un matériau de diffusion ayant une pluralité de nanopores (234) ;
dans lequel le matériau de diffusion est formé d'oxyde d'aluminium, Al₂O₃, ou de sulfate de baryum (BaSO₄) .

2. Appareil d'affichage selon la revendication 1, dans lequel le dispositif transflectif actif (200) est configuré pour réfléchir la lumière quand une tension n'est pas appliquée au dispositif transflectif actif.

3. Appareil d'affichage selon la revendication 2, dans lequel le dispositif transflectif actif (200) est configuré pour transmettre la lumière quand une première tension est appliquée au dispositif transflectif actif.

4. Appareil d'affichage selon la revendication 3, dans lequel le dispositif transflectif actif (200) est configuré pour transmettre et réfléchir la lumière quand une seconde tension est appliquée au dispositif transflectif actif.

5. Appareil d'affichage selon la revendication 1, dans lequel le panneau d'affichage (300, 400, 500, 600) module la lumière en commandant la transmissivité d'une couche de cristaux liquides (330) du panneau d'affichage.

6. Appareil d'affichage selon la revendication 5, dans lequel la couche de cristaux liquides (330) comprend un colorant noir et un cristal liquide dispersé dans un polymère (PDLC) .

7. Appareil d'affichage selon la revendication 1, dans lequel le panneau d'affichage (300, 400, 500, 600) comporte des particules d'électrification pour une électrophorèse.

8. Appareil d'affichage selon la revendication 1, dans lequel le panneau d'affichage (300, 400, 500, 600) comporte des matériaux d'électromouillage ou électrochromiques pour moduler la lumière.

9. Appareil d'affichage selon l'une quelconque des revendications précédentes,, comprenant en outre un unité de rétroéclairage (100).
